# EUROPÄISCHE PATENTSCHRIFT

(11) **EP 0 287 602 B1**
(45) Veröffentlichungstag und Bekanntmachung des Hinweises auf die Patenterteilung: **25.08.1993**
(21) Anmeldenummer: 87906638.9
(22) Anmeldetag: 21.10.1987
(51) Int. Cl.: C08G 63/00, C08G 63/79

(54) **VERFAHREN ZUR HERSTELLUNG AROMATISCHER POLYESTER**
PROCESS FOR PRODUCING AROMATIC POLYESTERS
PROCEDE POUR LA FABRICATION DE POLYESTERS AROMATIQUES

(30) Priorität: 21.10.1986 AT 2796/86
(43) Veröffentlichungstag der Anmeldung: 26.10.1988
(60) Teilanmeldung: 92121709.7
(73) Patentinhaber: ISOVOLTA, OSTERREICHISCHE ISOLIERSTOFFWERKE AKTIENGESELLSCHAFT, 2351 Wiener Neudorf (AT)
(72) Erfinder: FIALLA, Peter, A-2344 Maria Enzersdorf (AT)
(74) Vertreter: Stampfer, Heinz
(86) Internationale Anmeldenummer: AT8700062
(87) Internationale Veröffentlichungsnummer: WO8803152

(56) Entgegenhaltungen:
- EP-A- 0 041 496
- WO-A-82/00149
- CH-A- 597 272

## Beschreibung

Die Erfindung betrifft ein Verfahren zur Herstellung aromatischer Polyester durch Polykondensation von ein- oder mehrkernigen, substituierten oder unsubstituierten Diphenolen mit Halogeniden aromatischer Dicarbonsäuren nach dem Zweiphasengrenzflächen-Polykondensationsverfahren, wobei aus der wässrigen Phase, bestehend aus einer Lösung aus den Diphenolen, Alkalihydroxyd zur Bildung der Diphenolate und gegebenenfalls einem Phasentransferkatalysator in Wasser oder in einem Gemisch aus Wasser und einem organischen Lösungsvermittler, mit der organisch-flüssigen Phase, bestehend aus einer Lösung der Säurehalogenide in einem organischen Lösungsmittel, eine feine Reaktionsemulsion hergestellt wird, wobei die in die organisch-flüssige Phase übergeführten Diphenolate mit den Säurehalogeniden die Polykondensationsreaktion eingehen.

Verfahren der obengenannten Art sind schon seit langem bekannt, z.B. auch aus der USA-Patentschrift Nr.3216970. Das Polykondensationsverfahren wird hier als Chargen-Verfahren durchgeführt, wobei in einem Reaktionsgefäß die wässrige und die organisch-flüssige Phase unter kräftigem Rühren gemischt werden und der bei der Polykondensation sich bildende Polyester nach Trennung der Phasen schließlich aus der organischflüssigen Phase gefällt wird.

Die nach einem solchen Chargen-Verfahren hergestellten Polyester weisen aber oft eine Molekulargewichtsverteilung mit einem relativ hohen Oligomeranteil auf, der sich z.B. auf die Materialeigenschaften der aus einem solchen Polyester hergestellten Filme in vielen Fällen negativ auswirkt. Außerdem ergeben sich bei diesen Verfahren bei größeren Chargen die Schwierigkeiten, die Emulsion, deren Viskosität mit fortschreitender Polymerbildung stark zunimmt, in ausreichendem Maße zu rühren sowie - wegen der Exothermie des Prozesses - durch einen hohen Kühlaufwand auf den gewünschten niedrigen Reaktionstemperaturen zu halten. Außerdem sind solche Chargen-Verfahren in ihren Ergebnissen nicht sehr gut reproduzierbar.

Der Erfindung liegt nun die Aufgabe zugrunde, ein Verfahren der eingangs genannten Art anzugeben, das in gut reproduzierbarer Weise die Herstellung von aromatischen Polyestern in großen Mengen erlaubt, welche Polyester nur einen geringen Anteil an Oligomeren aufweisen.

Die der Erfindung zugrundeliegende Aufgabe wird in dem erfindungsgemäßen Verfahren gelöst, das dadurch gekennzeichnet ist, daß für ein kontinuierliches Verfahren aus der wässrigen Phase und einem organischen Lösungsmittel eine feine Voremulsion hergestellt wird, daß die Voremulsion und die organisch-flüssige Phase dem Eingang einer Dispergiereinrichtung kontinuierlich in Mengen zugeführt werden, daß die an der Polykondensationsreaktion teilnehmenden Verbindungen im konstanten Verhältnis zueinander in der Dispergiereinrichtung zur Bildung der Reaktionsemulsion gemischt werden und daß die Reaktionsemulsion danach nacheinander eine oder mehrere Dispergiereinrichtungen und/oder statische Mixer durchläuft. Dabei nimmt vorteilhaft im Volumen der Reaktionsemulsion und gegebenenfalls auch der Voremulsion die wässrige Phase den kleineren Volumsanteil ein, so daß die organisch-flüssige Phase bzw. das organische Lösungsmittel die kontinuierliche Phase der betreffenden Emulsion bildet.

Die eingesetzten zweikernigen Diphenole sind bevorzugt Verbindungen der Formel 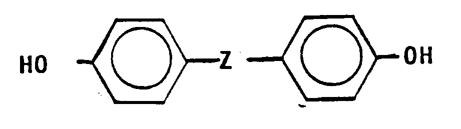
in der Z eine Einfachbindung, 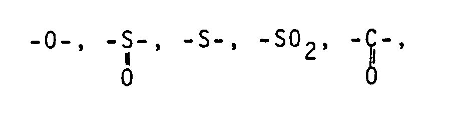
ein bifunktioneller aliphatischer Kohlenwasserstoffrest oder ein bifunktioneller, mindestens einen aromatischen oder zycloaliphatischen Ring enthaltender Kohlenwasserstoffrest ist, sowie alkylierte oder halogenierte Derivate solcher Verbindungen.

Das erfindungsgemäße Verfahren umfaßt auch den Einsatz von Gemischen verschiedener Diphenolate sowie von Gemischen verschiedener Säurechloride.

Gemäß einer vorteilhaften Ausgestaltung der Erfindung durchläuft die Reaktionsemulsion zunächst einen oder mehrere statische Mixer, danach eine Dispergiereinrichtung und anschließend wieder einen oder mehrere statische Mixer.

Nach einer weiteren vorteilhaften Ausgestaltung der Erfindung ist das erfindungsgemäße Verfahren dadurch gekennzeichnet, daß Dispergiereinrichtungen eingesetzt werden, die jeweils zumindest einen sich mit Umfanggeschwindigkeiten von mindestens 5 m/s, vorzugsweise jedoch von mindestens 10 m/s drehenden Rotor aufweist, der mit mehreren Ausnehmungen oder Durchbrüchen versehen ist und der jeweils durch eine schmale Mischkammer von einem zugehörigen, gegebenenfalls ebenfalls mit Ausnehmungen oder Durchbrüchen versehenen Stator getrennt ist.

Nachstehend wird das erfindungsgemäße Verfahren anhand eines Beispiels näher erläutert.

Zur Herstellung der wässrigen Phase werden in 3 l demineralisiertem Wasser und 1,5 l Dioxan zunächst 92 g (2,3 Mol) NaOH und danach 350 g (1 Mol) 9,9-Bis(4-hydroxyphenyl)-fluoren unter Erwärmen gelöst. Dieser Lösung werden dann 23 g (0,1 Mol) Benzyltriäthylammoniumchlorid in 100 ml demineralisiertem Wasser gelöst als Phasentransferkatalysator zugegeben.

Die organisch flüssige Phase besteht aus einer Lösung von 101,6 g (0,50 5 Mol) iso-Phthaloylchlorid und 101,6 g (0,5005 Mol) tere-Phthaloylchlorid in 1 l wasserfreiem (absolutiertenm) 1,2-Dichloräthan.

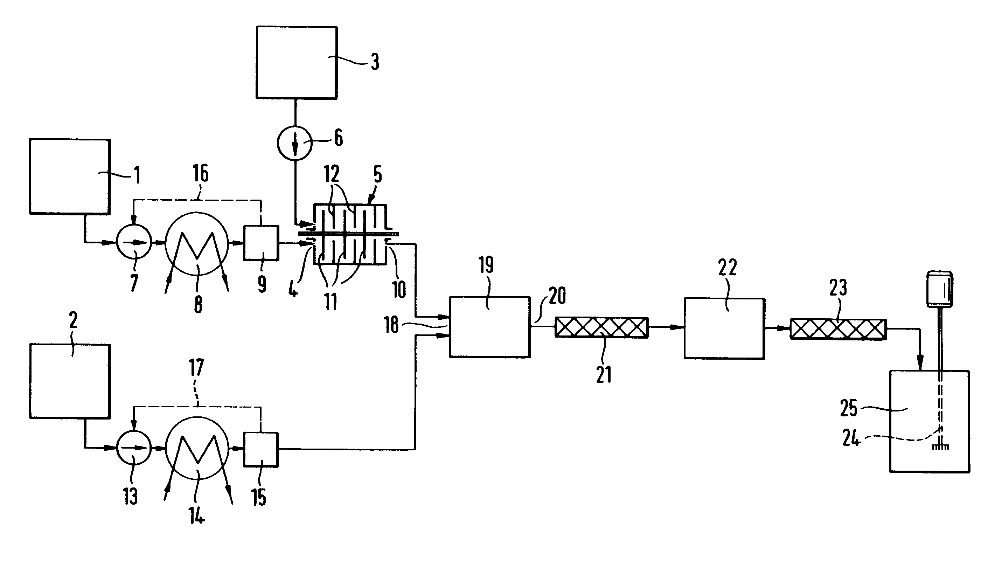

Die Zeichnung stellt ein Schema der bei dem vorliegenden Verfahrensbeispiel zur Verwendung gelangenden Vorrichtung dar.

Die wässrige Phase und organisch-flüssige Phase werden jeweils auf etwa 17°C gekühlt und in die Behälter 1 bzw. 2 eingebracht. In den Behälter 3 wird 1,2 Dichloräthan (DCE) in einer Menge von 6 l eingefüllt. Während des Ablaufes des Verfahrens werden zur Herstellung einer Voremulsion dem Eingang 4 einer ersten Dispergiereinrichtung 5 zugeführt: aus dem Behälter 3 über eine Pumpe 6 das DCE mit einer Flußmenge von 0,2 l/min und aus dem Behälter 1 über eine Pumpe 7, einen Wärmetauscher 8 und ein Durchflußmeßgerät 9 die wässrige Phase in einer Flußmenge von 0,16 l/min. Aus dem DCE und der wässrigen Phase wird beim Durchgang durch die Dispergiereinrichtung 5 kontinuierlich eine feine Voremulsion mit dem DCE als kontinuierliche Phase hergestellt, die am Ausgang 10 der Dispergiereinrichtung 5 abgeführt wird.

Die Dispergiereinrichtung 5 ist vom Rotor-Stator-Typ, welche z.B. drei hintereinandergeschaltete Mischstufen enthält, wobei jede Mischstufe einen mit z.B. spaltförmigen Durchbrüchen versehenen Rotor 11 aufweist, der - in Durchflußrichtung - über eine schmale Mischkammer von einem ebenfalls mit Durchbrüchen versehenen Stator 12 versehen ist. Die Umfangsgeschwindigkeit der auf einer gemeinsamen Antriebswelle sitzenden Rotoren 11 beträgt dabei etwa 17 m/s.

Gleichzeitig mit der kontinuierlichen Herstellung der Voremulsion wird aus dem Behälter 2 über eine Pumpe 13, einen Wärmetauscher 14 und ein Durchflußmeßgerät 15 die aus der Säurechloridlösung bestehende organisch-flüssige Phase mit einer Flußmenge von 0,04 l/min kontinuierlich und gemeinsam mit der Voremulsion dem Eingang 18 einer zweiten Dispergiereinrichtung 19, die ähnlich wie die erste Dispergiereinrichtung 5 aufgebaut ist, zugeführt, in welche die Säurechloridlösung mit dem DCE der Voremulsion gemischt und die Feinheit der Emulsion aufrechterhalten bzw. noch weiter gesteigert wird. In der Dispergiereinrichtung 19 setzt dann die Polykondensation schlagartig ein, wobei das sich bildende Polymere in der organisch-flüssigen Phase gelöst bleibt.

Für das einwandfreie Funktionieren des Verfahrens ist es wichtig, daß das in der wässrigen Phase gelöste Diphenolat und das in der organisch-flüssigen Phase zugeführte Säurechlorid immer in einem genau definierten konstanten Verhältnis zueinander zur Reaktion gebracht werden. Dazu werden die beiden Phasen mit Hilfe der beiden Wärmetauscher 8 bzw. 14 auf einer Temperatur von z.B. 17°C gehalten und mit dieser Temperatur den Durchflußmeßgeräten 9 und 15 zugeführt, welche über die mit 16 und 17 angedeuteten Regelkreise die Förderleistung der Pumpen 7 bzw. 13 im Hinblick auf die konstanten Durchflußmengen steuern.

Die vom Ausgang 20 der Dispergiereinrichtung 19 abgeführte in Form einer feinen Emulsion mit homogener organisch-flüssiger Phase vorliegende Reaktionsemulsion wird durch einen ersten statischen Mixer 21, anschließend durch eine weitere Dispergiereinrichtung 22 von derselben Art wie die beiden ersten Dispergiereinrichtungen 5 bzw. 19 und schließlich durch einen zweiten statischen Mixer 23 geleitet, wonach die Polykondensationsreaktion abgeschlossen ist. Die Verweilzeit der Reaktionsemulsion in der Reaktionszone, d.h. vom Eingang 18 der Dispergiereinrichtung 19 bis zum Ausgang des zweiten statischen Mixers 23 beträgt bei dem vorliegenden Beispiel etwa 4 min.

Die Emulsion, in welcher der gebildete Polyester in der organisch-flüssigen Phase gelöst ist, wird dann in ein mit einem Rührwerk 24 versehenen Gefäß 25, in welchem etwa 10 l demineralisiertes Wasser vorgelegt ist, eingeleitet. Nach Verbrauch der in den Behältern 1 und 2 vorbereiteten Lösungen und nach Auslaufen des Polykondensationsvorganges werden die beiden Phasen durch Absitzen getrennt und die alkalische wässrige Phase verworfen. Die verbleibende Lösung des Polyesters in DCE wird dann chloridfrei gewaschen und der Polyester durch Einleiten von Aceton gefällt, zentrifugiert und bei 130°C getrokknet. Die bei 30°C an einer Lösung von 0,5 g Polyester in 100 ml Lösungsmittel bestehend zu 60 Gew.% aus Phenol und zu 40 Gew.% aus 1,1,2,2-Tetrachloräthan gemessene Inhärente Viskosität betrug 1,62 dl/g.

Mit Hilfe des erfindungsgemäßen Verfahrens können Polyester hergestellt werden, welche überwiegend Säureendgruppen oder phenolische Endgruppen aufweisen je nachdem das Säurechlorid bzw. das Diphenolat in geringem Überschuß eingesetzt wird. Wegen der zur Polykondensation in Konkurrenz stehenden Hydrolyse des Säurechlorids, welche die für die Polykondensationsreaktion zur Verfügung stehende Säurechloridmenge reduziert, wird zur Erreichung eines für die Polykondensation maßgeblichen stöchiometrischen Verhältnisses der eingesetzten Reaktanden, bei welchen erfahrungsgemäß ein Maximum der Inhärenten Viskosität erreicht wird, vorzugsweise mit geringem Säurechloridüberschuß gearbeitet (1,001 Mol Säurechlorid gegenüber 1 Mol Diphenolat bei dem vorliegenden Beispiel).

## Patentansprüche

1. Verfahren zur Herstellung aromatischer Polyester durch Polykondensation von ein- oder mehrkernigen substituierten bzw. unsubstituierten Diphenolen mit Halogeniden aromatischer Dicarbonsäuren nach dem Zweiphasengrenzflächen-Polykondensationsverfahren, indem (i) aus der wässrigen Phase, bestehend aus einer Lösung aus den Diphenolen, Alkalihydroxyd zur Bildung der Diphenolate und gegebenenfalls einem Phasentransferkatalysator in Wasser oder in einem Gemisch aus Wasser und einem organischen Lösungsvermittler, und (ii) der organisch-flüssigen Phase, bestehend aus einer Lösung der Säurehalogenide in einem organischen Lösungsmittel, eine feine Reaktionsemulsion hergestellt wird, wobei die in die organisch-flüssige Phase übergeführten Diphenolate mit den Säurechloriden die Polykondensationsreaktion eingehen, wobei Zunächst kontinuierlich aus der wässrigen Phase und einem organischen Lösungsmittel eine feine Voremulsion hergestellt wird, die Voremulsion und die organische flüssige Phase dem Eingang einer Dispergiereinrichtung kontinuierlich in Mengen zugeführt werden, daß die an der Polykondensationsreaktion teilnehmenden Verbindungen in konstanten Verhältnis zueinander in der Dispergiereinrichtung zur Bildung der Reaktionsemulsion gemischt werden, die Reaktionsemulsion danach während die Reaktion stattfindet, nacheinder kontinuierlich eine oder mehrere Dispergiereinrichtungen und/oder statische Mixer durchläuft und die Reaktionsemulsion schließlich kontinuierlich abgeführt wird.

2. Verfahren nach Anspruch 1 , dadurch gekennzeichnet, daß im Volumen der Reaktionsemulsion und gegebenenfalls auch der Voremulsion die wässrige Phase den kleineren Volumsanteil einnimmt, so daß die organisch-flüssige Phase bzw. das organische Lösungsmittel die kontinuierliche Phase der betreffenden Emulsion bildet.

3. Verfahren nach Anspruch 1 oder 2, dadurch gekennzeichnet, daß die Reaktionsemulsion zunächt einen oder mehrere statische Mixer (21), danach eine Dispergiereinrichtung (22) und anschließend wieder einen oder mehrere statische Mixer (23) durchläuft.

4. Verfahren nach einem der Ansprüche 1 bis 3, dadurch gekennzeichnet, daß Dispergiereinrichtungen (5, 19, 22) eingesetzt werden, die jeweils zumindest einen sich mit Umfangsgeschwindigkeiten von mindestens 5 m/s vorzugsweise jedoch von mindestens 10 m/s drehenden Rotor (11) aufweisen, der mit mehreren Ausnehmungen oder Durchbrüchen versehen ist und der jeweils durch eine schmale Mischkammer von einem zugehörigen, gegebenenfalls ebenfalls mit Ausnehmungen oder Durchbrüchen versehenen Stator (12) getrennt ist.

## Claims

1. A process for the manufacture of aromatic polyesters by polycondensation of mono- or multi-nuclear substituted or unsubstituted diphenols with halides of aromatic dicarboxylic acids according to the two-phase interface polycondensation process, in that
(i) from the aqueous phase, consisting of a solution of the diphenols, alkali hydroxide for the formation of the diphenolates and possibly a phase transfer catalyst in water or in a mixture of water and an organic solubilizer, and
(ii) from the organo-liquid phase, consisting of a solution of the acid halides in an organic solvent,
a fine reaction emulsion is produced, in which case the diphenolates transferred into the organo-liquid phase enter with the acid chlorides into the polycondensation reaction, in which case first of all a fine pre-emulsion is produced continuously from the aqueous phase and an organic solvent, the pre-emulsion and the organic liquid phase are fed continuously in quantities to the inlet of a dispersion unit, the compounds participating in the polycondensation reaction are mixed in a constant ratio to one another in the dispersion unit for the formation of the reaction emulsion, the reaction emulsion after that, while the reaction is taking place, continuously passes successively through one or more dispersion units and/or static mixers and the reaction emulsion is finally removed continuously.

2. A process according to claim 1, characterised in that in the volume of the reaction emulsion and possibly also of the pre-emulsion the aqueous phase assumes the smaller proportion by volume, so that the organo-liquid phase or the organic solvent forms the continuous phase of the emulsion in question.

3. A process according to claim 1 or 2, characterised in that the reaction emulsion passes first of all through one or more static mixers (21), after that through a dispersion unit (22) and then again through one or more static mixers (23).

4. A process according to one of claims 1 to 3, characterised in that dispersion units (5, 19, 22) are used which in each case have at least one rotor (11) which rotates at peripheral speeds of at least 5 m/s, but preferably at least 10 m/s, and which is provided with several recesses or apertures and which is in each case separated by a narrow mixing chamber from an associated stator (12) which is possibly likewise provided with recesses or apertures.

## Revendications

1. Procédé de préparation de polyesters aromatiques par polycondensation d'un ou plusieurs diphénols condensés ou non, substitués ou non-substitués avec des halogénures d'acides aromatiques dicarboxyliques selon un procédé de polycondensation en deux phases distinctes, dans lequel une fine émulsion réactionnelle est obtenue à partir de:
(i) la phase aqueuse, constituée d'une solution de diphénols, d'hydroxyde alcalin pour la formation de diphénolate et éventuellement d'un catalyseur de transfert de phase, dans de l'eau ou dans un mélange d'eau et d'un agent de solubilisation organique, et de
(ii) la phase organique fluide, constituée d'une solution des halogénures d'acides dans un solvant organique,
dans lequel procédé des diphénolates transférés dans la phase organique fluide réagissent avec les halogénures d'acides selon une réaction de polycondensation, puis est formée en continu pré-émulsion à partir de la phase aqueuse et d'un solvant organique, lesdites pré-émulsion et phase organique fluide étant amenées en quantités de façon continue à un orifice d'un dispositif de dispersion, et les composés prenant part à la réaction de polycondensation étant mélangés entre eux selon un rapport constant dans le dispositif de dispersion pour former l'émulsion réactionnelle, l'émulsion réactionnelle s'écoulant ensuite, pendant que la réaction se poursuit de façon continue dans un ou plusieurs dispositif(s) de dispersion et/ou mélangeur(s) statique(s) et l'émulsion réactionnelle étant enfin soutirée en continu.

2. Procédé selon la revendication 1, caractérisé en ce que, dans le volume de l'émulsion réactionnelle et le cas échéant également de la pré-émulsion, la phase aqueuse occupe la plus petite partie du volume de sorte que la phase organique fluide ou, le cas échéant, l'agent de solubilisation organique forme la phase continue de l'émulsion concernee.

3. Procédé selon la revendication 1 ou 2, caractérisé en ce que l'émulsion réactionnelle s'écoule tout d'abord dans un ou plusieurs mélangeur(s) statique(s) (21), puis dans un dispositif de dispersion (22) et finalement à nouveau dans un ou plusieurs mélangeur(s) statique(s) (23).

4. Procédé selon une quelconque des revendications 1 à 3, caractérisé en ce qu'on utilise des dispositifs de dispersion (5, 19, 22), qui comportent chacun au moins un rotor (11) tournant à des vitesses au de rotation périphérique d'au moins 5 m/s, de préférence/ d'au moins 10 m/s, ce rotor étant muni de plusieurs cavités ou découpes et, le cas échéant, est séparé par une petite chambre de mélange du stator (12) attenant éventuellement, également muni de cavités ou découpes.
